# EUROPÄISCHE PATENTSCHRIFT

(11) **EP 0 610 374 B1**
(45) Veröffentlichungstag und Bekanntmachung des Hinweises auf die Patenterteilung: **30.08.1995**
(21) Anmeldenummer: 92923043.1
(22) Anmeldetag: 30.10.1992
(51) Int. Cl.: G01B 11/24, G01D 5/26, G01B 9/02

(54) **VERFAHREN ZUR MESSUNG DER NEIGUNGEN VON GRENZFLÄCHEN IN EINEM OPTISCHEN SYSTEM**
PROCESS FOR MEASURING THE INCLINATION OF BOUNDARY AREAS IN AN OPTICAL SYSTEM
PROCEDE POUR LA MESURE DES INCLINAISONS D'INTERFACES DANS UN SYSTEME OPTIQUE

(30) Priorität: 31.10.1991 DE 4135959
(43) Veröffentlichungstag der Anmeldung: 17.08.1994
(73) Patentinhaber: Leica AG, CH-9435 Heerbrugg (CH)
(72) Erfinder: GÄCHTER, Bernhard, CH-9436 Balgach (CH); BRAUNECKER, Bernhard, CH-9445 Rebstein (CH)
(74) Vertreter: Stamer, Harald, Dipl.-Phys.
(86) Internationale Anmeldenummer: EP9202497
(87) Internationale Veröffentlichungsnummer: WO9309395

(56) Entgegenhaltungen:
- US-A- 4 832 489
- PATENT ABSTRACTS OF JAPAN vol. 6, no. 2 (P-96) 8. Januar 1982 ; & JP-A-56 128 407
- PATENT ABSTRACTS OF JAPAN vol. 8, no. 31 (P-253)(1468) 9. Februar 1984 ; & JP-A-58 186 005
- PATENT ABSTRACTS OF JAPAN vol. 10, no. 322 (P-511) 31. Oktober 1986 ; & JP-A-61 128 104
- PATENT ABSTRACTS OF JAPAN vol. 15, no. 71 (P-1168) 19. Februar 1991 ; & JP-A-22 91 930

## Beschreibung

Die Erfindung betrifft ein Verfahren und eine Vorrichtung mit den Merkmalen des Oberbegriffes der Ansprüche 1 und 10.

Eine Vorrichtung dieser Art ist bekannt aus der EP-A2 0 253 242. In der dort beschriebenen Vorrichtung wird ein von einer Lichtquelle ausgehender, durch eine Blende begrenzter Lichtstrahl mit einer Abbildungsoptik auf eine zu untersuchende Grenzfläche kollimiert, deren Neigung gegenüber einer Bezugsachse bestimmt werden soll. Die von der ankollimierten Grenzfläche reflektierte Wellenfront wird mit derselben Abbildungsoptik auf ein positionsempfindliches Fotodetektionssystem abgebildet. Aus dessen positionsabhängigen Ausgangssignalen ermittelt eine Auswertungselektronik die Ablage des von der zu untersuchenden Grenzfläche reflektierten Blendenbildes gegenüber der Bezugsachse und daraus die Neigung der zu untersuchenden Grenzfläche gegenüber der Bezugsachse. In der beschriebenen Vorrichtung wird als positionsempfindliches Fotodetektionssystem ein CCD-Zeilensensor eingesetzt. Es wird eine besondere Schwellwertschaltung angegeben, um die dem Blendenbild zugeordneten Meßsignale von den überlagerten Störstrahlungssignalen zu trennen.

Anstelle des Zeilensensors kann auch eine Vierquadrantendiode oder eine Lateraldiode verwendet werden, wie es in dem elektronischen Autokollimator UDT Modell 1000 der Firma United Detector Technology realisiert ist.

Nachteilig bei der Messung der Neigung von Grenzflächen mit Autokollimatoren erweist sich die Anwendung bei reflexionsarmen Grenzflächen, da dann die Lage des Blendenbildes aufgrund des schwachen Kontrastes nicht mehr sicher gemessen werden kann. Ebenso erweist sich die Methode als kritisch bei dicht hintereinanderliegenden Radienmittelpunkten verschiedener Grenzflächen. Dann stören die Grenzflächen mit den benachbarten Radienmittelpunkten die Messung durch Streulicht, bzw. es besteht sogar die Gefahr der Verwechslung der zu untersuchenden Grenzfläche mit einer nicht zu untersuchenden Grenzfläche, d. h. eine eindeutige Zuordnung des Blendenreflexes zu einer bestimmten Grenzfläche ist nicht möglich.

Der Erfindung liegt die Aufgabe zugrunde, ein Verfahren und eine Vorrichtung zur Messung der Neigungen von Grenzflächen in einem optischen System anzugeben, welche eine eindeutige Trennung des Reflexes der zu untersuchenden Grenzfläche von den störenden Reflexen der nicht zu untersuchenden Grenzflächen gestatten, einen Nachweis der Reflexintensität bis hinab an die Grenze des Photonenrauschens ermöglichen und eine Auflösung der Ablage des Reflexes von einer Bezugsachse in der Größenordnung von 10 nm bieten.

Diese Aufgabe wird bei einem Verfahren der eingangs genannten Art erfindungsgemäß durch die kennzeichnenden Merkmale des Anspruchs 1 gelöst. Eine Vorrichtung zur Ausübung dieses Verfahrens ist im Anspruch 10 angegeben. Vorteilhafte Weiterbildungen des Verfahrens sowie vorteilhafte Ausbildungen der Vorrichtung ergeben sich aus den jeweiligen Unteransprüchen.

Durch die Erfindung wird die Anwendung interferometrischer Methoden zur Messung der Neigungen von Grenzflächen in optischen Systemen erfolgreich eingeführt, weil bei der Messung des von der zu untersuchenden, ankollimierten Grenzfläche resultierenden Interferogramms die von den nicht interessierenden und nicht ankollimierten Grenzflächen verursachten Störreflexe separiert werden. Dadurch wird eine sichere Zuordnung des Interferogramms zu der dazugehörigen Grenzfläche möglich.

Wegen der zeitlichen Modulation in einem der Strahlengänge ist das Verfahren als ein Heterodyn-Verfahren zu bezeichnen. Bei den heterodynen Inferferometrie-Verfahren nutzt man aus, daß Signal- und Störstrahlung an unterschiedlichen Orten entstehen. Wenn man nun die Signal- und die Störstrahlung unterschiedlich markiert, kann man sie bei der Signalauswertung auch unterscheiden.

Dazu wird im erfindungsgemäßen Verfahren der Lichtstrahl parallelgerichtet und danach an einem Strahlteiler in einen Prüfstrahl und einen Referenzstrahl aufgeteilt. Der Prüfstrahl wird dann auf die jeweils zu untersuchende Grenzfläche kollimiert. Aufgrund der optischen Daten der dazu verwendeten Kollimationsoptik und der Daten des zu untersuchenden optischen Systems läßt sich der Prüfstrahl auf eine bestimmte Grenzfläche kollimieren. Unter Kollimation auf eine plane Grenzfläche wird verstanden, daß der Prüfstrahl nach unendlich abgebildet wird, während bei Kollimation auf eine sphärische Fläche die Abbildung auf deren Radienmittelpunkt erfolgt. Die Wellenfront des Prüfstrahles, die von der zu untersuchenden Grenzfläche reflektiert wird, soll als Signalstrahl bezeichnet werden. Demgegenüber sollen die von den anderen, nicht zu untersuchenden optischen Grenzflächen reflektierten Anteile des Prüfstrahles als Störstrahlen bzw. Störreflexe bezeichnet werden. Die Wellenlänge der verwendeten Strahlung ist den optischen Eigenschaften der zu untersuchenden Grenzflächen anzupassen und ist nicht auf Licht im klassischen Sinne beschränkt. Vielmehr sind z. B. auch Radar-, mm- und Ultraschallwellen verwendbar.

Der Referenzstrahl wird über einen vorzugsweise senkrecht zu seiner optischen Achse angeordneten Referenzspiegel in sich zurückgeworfen und vorzugsweise als Parallelstrahl auf das positionsempfindliche Fotodetektionssystem geleitet.

Der Abgleich der optischen Weglänge des Referenzstrahls mit der des Prüfstrahls bis zu der jeweils zu untersuchenden Grenzfläche des optischen Systems erfolgt durch Verschieben des Referenzspiegels.

Danach wird die von der zu untersuchenden Grenzfläche des optischen Systems reflektierte Wellenfront mit einer Hilfsoptik auf das positionsempfindliche Fotodetektionssystem abgebildet und dort mit der vom Referenzspiegel reflektierten Wellenfront überlagert, so daß sich ein Interferogramm ausbildet. Der Schwerpunkt des Interferogramms liegt in einer dem Neigungswinkel entsprechenden Ablage gegenüber der Bezugsachse.

Durch die Auswahl einer Kohärenzlänge des Lichtstrahls, die kürzer ist als die kleinste optische Wegdifferenz zwischen dem Signalstrahl und den Störstrahlen, kommt es nicht zur Interferenz von Störstrahlen mit dem Referenzstrahl. Die Störreflexe sind damit aber noch nicht beseitigt. Sie sind dem Interferogramm weiterhin überlagert.

Um das Interferogramm der jeweils zu untersuchenden Grenzfläche des optischen Systems von den störenden Reflexen der anderen, nicht zu untersuchenden und störenden Grenzflächen unterscheiden zu können, wird es intensitätsmoduliert. Damit ist es für die Verarbeitung der Signale des positionsempfindlichen Fotodetektionssystems unterscheidbar markiert, denn die Störstrahlen und damit auch die Störreflexe sind nicht intensitätsmoduliert.

Die Intensitätsmodulation des genannten Interferogramms wird erfindungsgemäß erzeugt durch zeitliche Modulation der optischen Weglänge des Prüf- oder Referenzstrahls. Dadurch wird die optische Weglängendifferenz zwischen dem Referenzstrahl und dem Prüfstrahl bis zu der zu untersuchenden Grenzfläche moduliert. Um auch hierbei eine Interferenz von Störstrahlen und Referenzstrahl auszuschließen, darf der Modulationshub die Größe der erfindungsgemäß gewählten Kohärenzlänge nicht überschreiten.

Eine Modulation des Referenzstrahlweges ist an sich seit langem bekannt. So beschreibt die Patentschrift DE 25 28 209 B2 zur Vermessung optischer Oberflächen mit einem Reflexionsgrad von mindestens einigen Prozenten einen optischen Feintaster, bei dem in einem Zweistrahlinterferometer der Gangunterschied zwischen Prüf- und Referenzstrahlweg um mehr als die Kohärenzlänge des Lichtes moduliert wird. Jedoch wird in dem beschriebenen optischen Feintaster die Modulation des Referenzstrahlweges nicht vorgenommen, um einen bestimmten Lichtstrahl oder ein Interferogramm bestimmter Herkunft zu markieren. Vielmehr dient die Modulation dort zur Erzeugung eines internen Streckenmaßstabes für das Meßverfahren. Bei diesem dient als Meßanweisung die Überlegung, daß zu den periodisch wiederkehrenden Zeitpunkten maximalen Kontrastes der Weißlichtinterferenzen, denen eine maximale Modulationstiefe des Empfängersignals entspricht, der momentane Modulationshub den Abstand des Meßobjekts angibt. Daher muß in dem optischen Feintaster der Modulationshub gemessen werden.

Demgegenüber ist in der vorliegenden Erfindung eine Messung des Modulationshubes nicht erforderlich, und der Modulationshub muß die Kohärenzlänge unterschreiten. Die zeitliche Modulation der optischen Weglänge des Prüf- oder Referenzstrahles lediglich innerhalb der - wie bereits oben beschrieben - gewählten kurzen Kohärenzlänge bietet den Vorteil, daß sich nur ein einziges intensitätsmoduliertes Interferogramm aus Signalstrahl und Referenzstrahl ergibt, das ein zeitlich moduliertes Signal am positionsempfindlichen Fotodetektionssystem bewirkt. Diesem ist ein zeitlich nicht moduliertes, von den Störstrahlen und dem Referenzstrahl resultierendes Fotodetektorsignal überlagert, da die Störstrahlen wegen der gewählten kurzen Kohärenzlänge nicht mit dem Referenzstrahl interferieren können. Der zeitlich modulierte Fotodetektorsignalanteil kann dann vom zeitlich unmodulierten Fotodetektorsignalanteil durch elektronische Auswertung leicht separiert werden.

Die Auswertungselektronik trennt zunächst die Signalanteile des zeitlich intensitätsmodulierten Interferogramms von denen der nicht intensitätsmodulierten Störreflexe und des nicht intensitätsmodulierten Referenzstrahls. Vorteilhafterweise wendet man hierzu unter Ausnutzung der zeitlichen Modulation des Interferogramms die Lock-In-Technik an, mit der auch ein Interferogramm mit einer Intensität weit unter der der Störreflexe separiert werden kann, so daß z. B. bei der Untersuchung von extrem reflexionsschwachen Grenzflächen ein Nachweis der Signalstrahl-Reflexintensität bis hinab an die Grenze des Photonenrauschens möglich ist. Unabhängig vom gewählten Modulationshub wird die Lock-In-Verarbeitung phasenunabhängig mit einer Arbeitsfrequenz, die gleich der Modulationsfrequenz ist, vorgenommen.

Im zweiten Schritt bestimmt die Auswertungselektronik die Ablage des Schwerpunkts des Interferogramms gegenüber der Bezugsachse und damit die Neigung der zu untersuchenden Grenzfläche.

Die zeitliche Modulation der optischen Weglänge des Prüf- oder Referenzstrahls kann durch eine reine Weglängenmodulation, z.B. mit dem entlang der optischen Achse schwingenden Referenzspiegel geschehen. Der Hub der Schwingung wird entweder so groß wie eine Wellenlänge des verwendeten Lichtes oder über die ganze Kohärenzlänge, jedoch nicht größer als die Kohärenzlänge, eingestellt.

Ein kleiner Hub der Modulation, also über eine Wellenlänge des verwendeten Lichts, ist beispielsweise zu realisieren, indem man den Spiegel mit Hilfe eines piezoelektrischen Elements zu Schwingungen anregt. Wird ein großer Modulationshub gewünscht, kann dies vorteilhaft durch Mehrfachreflexion in einem Spiegelsystem mit einem feststehenden und einem schwingenden Spiegel mit kleinem Modulationshub erzielt werden.

Auch durch eine Änderung der Brechzahl eines Mediums im Strahlengang, z.B. durch elektrooptische Modulatoren, oder durch eine periodische Frequenzvariation des Lichts in einem Teil des Strahlenganges ist eine zeitliche Modulation der optischen Weglänge des Prüf- oder Referenzstrahls möglich, was jeweils eine Modulation der optischen Weglängendifferenz zwischen Referenzstrahl und Prüfstrahl bis zu der zu untersuchenden Grenzfläche bewirkt.

Die Modulationsfrequenz wird entsprechend den Spezifikationen der verwendeten Modulatoren und der Auswertungselektronik gewählt, beispielsweise zwischen 500 Hz und 500 kHz. Verwendet man z. B. als Modulator einen von einem Piezoelement zu Schwingungen angeregten Spiegel, stellt die größtmögliche Schwingungsfrequenz des Piezoelements die obere Begrenzung der Modulationsfrequenz dar.

Als positionsempfindliches Detektionssystem findet vorzugsweise eine Lateraldiode Verwendung (z. B. der Firma SiTek Electro Optics oder der Firma Hamamatsu). Deren Spezifikationen lassen eine laterale Auflösung und damit Auflösung der Ablage des Schwerpunktes des Interferogramms gegenüber der Bezugsachse in der Größenordnung von 10 nm zu. Es sind aber auch CCD-Kameras als positionsempfindliche Detektionssysteme geeignet. Diese besitzen jedoch lediglich eine laterale Auflösung von ca. 15 »m, die sich auch mit mathematischen Methoden im besten Fall auf lediglich 150 nm verbessern läßt.

Da das Verfahren dazu geeignet ist, die Interferogramme von Grenzflächen mit nahe hintereinanderliegenden Krümmungsradien sicher unterscheiden zu können, lassen sich die Neigungen der Grenzflächen auch in komplexen optischen Systemen nacheinander bestimmen. Aus der Abweichung der Neigungen der Einzelflächen von der vorgegebenen optischen Achse eines Gesamtsystems kann eine Aussage über den Zentrierzustand des Systems gewonnen werden. Durch gezielte Dezentrierung einzelner Flächen ist es dann auch möglich, den Zentrierzustand des Gesamtsystems zu korrigieren.

Das erfindungsgemäße Verfahren und die erfindungsgemäße Vorrichtung werden nachfolgend anhand eines in der Zeichnung schematisch dargestellten Ausführungsbeispiels für eine geeignete Interferometer-Anordnung beschrieben.

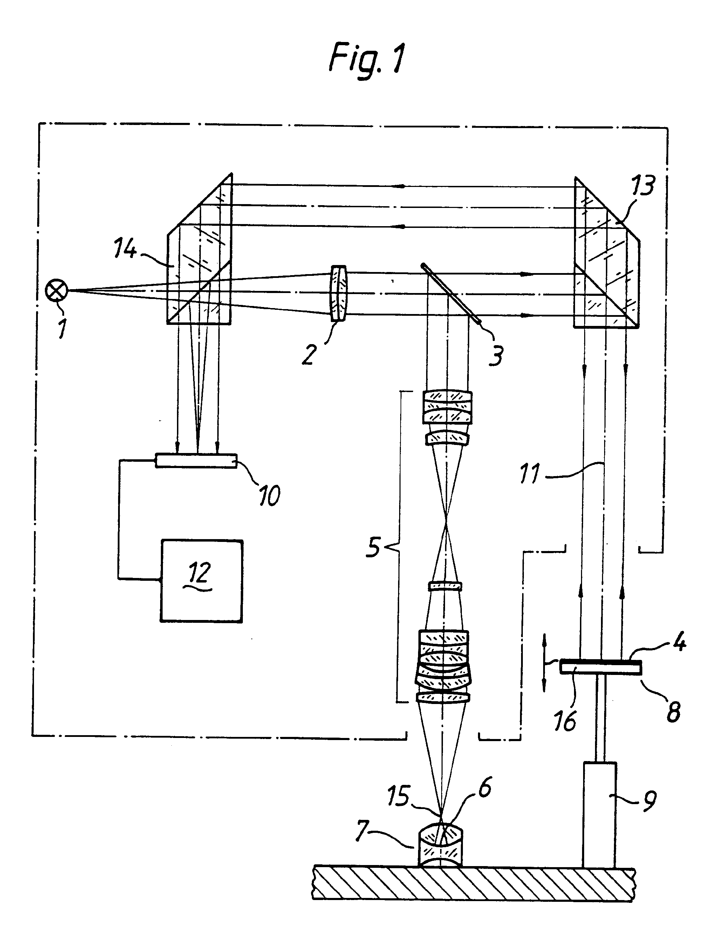

Fig. 1 zeigt ein Ausführungsbeispiel der Vorrichtung.

Der verwendete Interferometer-Aufbau ist dem Aufbau nach MICHELSON ähnlich.

Ein von einer Lichtquelle 1 ausgehender Lichtstrahl gewählter kurzer Kohärenzlänge wird von einer Hilfsoptik 2 parallelgerichtet und auf einen Strahlteiler 3 geleitet. Der Lichtstrahl wird von dem Strahlteiler 3 in zwei Teilstrahlen zerlegt, wobei im folgenden der teilreflektierte Anteil des Lichtstrahls als Prüfstrahl und der durchgehende Anteil als Referenzstrahl bezeichnet werden.

Der Referenzstrahl wird über ein erstes Prismensystem 13 zu einem Referenzspiegel 4 umgelenkt, der senkrecht zur optischen Achse 11 des Referenzstrahls angeordnet ist und den Referenzstrahl dadurch in sich selbst zurückwirft. Der am Referenzspiegel 4 reflektierte Referenzstrahl gelangt über das erste Prismensystem 13 und ein zweites Prismensystem 14 auf ein positionsempfindliches Fotodetektionssystem 10.

Der Prüfstrahl wird hinter dem Strahlteiler 3 mit Hilfe der Kollimationsoptik 5 auf den Radienmittelpunkt 15 einer hier zur Untersuchung ausgewählten sphärischen Grenzfläche 6 eines optischen Systems 7 abgebildet. Die an der zu untersuchenden Grenzfläche 6 reflektierte Wellenfront, die weiter oben als Signalstrahl bezeichnet wurde, wird nacheinander über die Kollimationsoptik 5, den Strahlteiler 3 und die Hilfsoptik 2, auf das positionsempfindliche Fotodetektionssystem 10 abgebildet. Als Kollimationsoptik 5 wird hier mit Vorteil ein System variabler Brennweite eingesetzt, um die verschiedenen Grenzflächen des Systems zur Untersuchung ankollimieren zu können. Anderenfalls müßte das zu untersuchende optische System 7 oder die Kollimationsoptik 5 längs der optischen Achse des Prüfstrahls verschoben werden.

Besonders vorteilhaft erweist es sich, wenn, wie im vorliegenden Ausführungsbeispiel, der Referenzstrahl die Empfangsfläche des positionsempfindlichen Fotodetektionssystems vollständig überdeckt, weil dann stets eine Interferenz von Signalstrahl und Referenzstrahl auf der Empfangsfläche des positionsempfindlichen Fotodetektionssystems 10 möglich ist.

Im dargestellten Beispiel ist die Grenzfläche ideal zur optischen Achse des Prüfstrahls zentriert. Der Signalstrahl wird in sich reflektiert, und das Interferogramm entsteht im Zentrum des Detektionssystems 10. Sobald die Grenzfläche gegenüber der optischen Achse des Prüfstrahls geneigt wird, verläuft auch der reflektierte Signalstrahl geneigt gegenüber dieser Achse, und das Interferogramm hat eine Ablage gegenüber dem Zentrum des Detektionssystems 10.

Zum Abgleich der optischen Weglänge des Referenzstrahls mit der des Prüfstrahls bis zu der zu untersuchenden Grenzfläche 6 verfügt der Referenzspiegel 4 über eine Verstellvorrichtung 9, die an sich bekannt und daher hier nur schematisch dargestellt ist.

Im vorliegenden Ausführungsbeispiel wird die optische Weglänge des Referenzstrahls moduliert. Dadurch wird die optische Weglängendifferenz zwischen Prüf- und Referenzstrahl moduliert. Dazu ist vorteilhaft der Referenzspiegel 4 selbst in den optischen Modulator 8 integriert, indem er nach Abgleich der optischen Weglängen von Referenzstrahl und Prüfstrahl bis zu der zu untersuchenden Grenzfläche in Schwingungen entlang der optischen Achse 11 versetzt wird. Das schwingungserregende System kann z. B. ein Piezoantrieb 16 sein. Dieser eignet sich insbesondere für einen kleinen Modulationshub in der Größe einer einzigen Wellenlänge des verwendeten Lichts. Die Einheit aus Referenzspiegel 4 und Piezoantrieb 16 bildet dann den Modulator 8.

Die Schwingung des Referenzspiegels erfolgt dann um eine Nullposition, die durch den erfolgten Abgleich der optischen Weglängen von Referenzstrahl und Prüfstrahl bis zu der zu untersuchenden Grenzfläche definiert ist, wodurch eine Modulation der optischen Weglängendifferenz dieser beiden Strahlen vorgenommen wird.

Als Lichtquelle 1 eignet sich besonders ein Diodenlaser mit einer kurzen Kohärenzlänge. Durch Änderung des Injektionsstroms kann die Kohärenzlänge in einfacher Weise gesteuert werden. Damit ist eine Anpassung der Kohärenzlänge an unterschiedliche Abstände der jeweils zu untersuchenden Grenzfläche zu den die Störstrahlen reflektierenden Grenzflächen möglich.

Mit dem positionsempfindlichen Fotodetektionssystem 10 ist eine Auswerteelektronik 12 verbunden, die die Ausgangssignale in der bereits beschriebenen Weise besonders vorteilhaft in der Lock-In-Technik verarbeitet und als Ergebnis die Neigung der zu untersuchenden Grenzfläche 6 gegenüber einer Bezugsachse angibt.

Die Wahl der Bezugsachse ist frei. In der Praxis definiert man bei der Untersuchung eines optischen Systems die Ablage des Reflexes einer bestimmten Grenzfläche als Nullablage. Die Ausbreitungsrichtung der diesen Reflex erzeugenden Wellenfront stellt dann die Bezugsachse dar.

Eine alternative Methode zur Wahl der Bezugsachse besteht darin, das zu prüfende optische System um seine mechanische Achse in Rotation zu versetzen. Man kollimiert eine Grenzfläche an und beobachtet die Rotation des zugehörigen Interferogramms auf der Empfangsfläche des positionsempfindlichen Fotodetektionssystems. Das Zentrum der Rotation repräsentiert die Nullablage und damit die Bezugsachse.

### Bezugszeichenliste

- 1: Lichtquelle
- 2: Hilfsoptik
- 3: Strahlteiler
- 4: Referenzspiegel
- 5: Kollimationsoptik
- 6: zu untersuchende Grenzfläche
- 7: zu prüfendes optisches System
- 8: Modulator
- 9: Verstellvorrichtung
- 10: positionsempfindliches Detektionssystem
- 11: optische Achse
- 12: Auswertungselektronik
- 13, 14: Prismensysteme
- 15: Radienmittelpunkt der zu untersuchenden Grenzfläche 6
- 16: Piezoantrieb

## Patentansprüche

1. Verfahren zur Messung der Neigungen von Grenzflächen in einem optischen System, wobei ein Lichtstrahl auf eine jeweils zu untersuchende Grenzfläche kollimiert wird und aus der Ablage einer von der zu untersuchenden Grenzfläche reflektierten Wellenfront gegenüber einer Bezugsachse auf einem positionsempfindlichen Fotodetektionssystem die Neigung der jeweils zu untersuchenden Grenzfläche gegenüber der Bezugsachse bestimmt wird, **dadurch gekennzeichnet**, daß
a) der Lichtstrahl in einen Prüfstrahl und einen Referenzstrahl aufgeteilt wird,
b) der Referenzstrahl über einen Referenzstrahlweg auf einen vorzugsweise senkrecht zur optischen Achse des Referenzstrahls angeordneten Referenzspiegel geleitet wird,
c) der Referenzstrahl auf die gleiche optische Weglänge wie die des Prüfstrahls bis zu der jeweils zu untersuchenden Grenzfläche abgestimmt wird,
d) die Kohärenzlänge des Lichtstrahls kürzer als die kürzeste optische Weglänge zwischen der jeweils zu untersuchenden Grenzfläche und der nächstliegenden, Störreflexe erzeugenden Grenzfläche des optischen Systems gewählt wird,
e) die optische Weglängendifferenz zwischen dem Referenzstrahl und dem Prüfstrahl bis zu der zu untersuchenden Grenzfläche mit einem Modulationshub bis höchstens zur Größe der Kohärenzlänge zeitlich moduliert wird,
f) die von der jeweils zu untersuchenden Grenzfläche reflektierte Wellenfront auf das positionsempfindliche Fotodetektionssystem abgebildet und dort mit der vom Referenzspiegel reflektierten Wellenfront überlagert wird, wodurch auf dem positionsempfindlichen Fotodetektionssystem ein zeitlich intensitätsmoduliertes Interferogramm entsteht und
g) durch elektronische Auswertung der positionsabhängigen Signale des positionsempfindlichen Fotodetektionssystems zunächst der vom zeitlich intensitätsmodulierten Interferogramm erzeugte modulierte Signalanteil von den durch die Störreflexe und den Referenzstrahl erzeugten unmodulierten Signalanteilen getrennt und danach die Ablage des Schwerpunkts des Interferogramms gegenüber der Bezugsachse bestimmt wird.

2. Verfahren nach Anspruch 1, **dadurch gekennzeichnet**, daß der Modulationshub der optischen Weglängendifferenz zwischen dem Referenzstrahl und dem Prüfstrahl bis zu der zu untersuchenden Grenzfläche eine einzige Wellenlänge des verwendeten Lichts beträgt.

3. Verfahren nach Anspruch 1, **dadurch gekennzeichnet**, daß der Modulationshub der optischen Weglängendifferenz zwischen dem Referenzstrahl und dem Prüfstrahl bis zu der zu untersuchenden Grenzfläche gleich der Kohärenzlänge ist.

4. Verfahren nach einem der Ansprüche 1 bis 3, **dadurch gekennzeichnet**, daß die Modulation der optischen Weglängendifferenz zwischen dem Referenzstrahl und dem Prüfstrahl bis zu der zu untersuchenden Grenzfläche durch periodische Variation der geometrischen Weglänge des Prüf- oder Referenzstrahls vorgenommen wird.

5. Verfahren nach einem der Ansprüche 1 bis 3, **dadurch gekennzeichnet**, daß die Modulation der optischen Weglängendifferenz zwischen dem Referenzstrahl und dem Prüfstrahl bis zu der zu untersuchenden Grenzfläche durch Ändern der Brechzahl eines Mediums im Strahlengang vorgenommen wird.

6. Verfahren nach einem der Ansprüche 1 bis 3, **dadurch gekennzeichnet**, daß die Modulation der optischen Weglängendifferenz zwischen dem Referenzstrahl und dem Prüfstrahl bis zu der zu untersuchenden Grenzfläche durch periodische Frequenzvariation des Lichts in einem Teil des Strahlengangs vorgenommen wird.

7. Verfahren nach einem der vorhergehenden Ansprüche, **dadurch gekennzeichnet**, daß die vom Referenzspiegel reflektierte Wellenfront die gesamte Empfangsfläche des positionsempfindlichen Fotodetektionssystem überdeckt.

8. Verfahren nach einem der vorhergehenden Ansprüche, **dadurch gekennzeichnet**, daß die Trennung der intensitätsmodulierten Anteile von den unmodulierten Anteilen der positionsabhängigen Signale des positionsempfindlichen Fotodetektionssystems in der Lock-In-Technik vorgenommen wird.

9. Verfahren nach einem der vorhergehenden Ansprüche, **dadurch gekennzeichnet**, daß alle Grenzflächen des optischen Systems nacheinander ankollimiert werden und aus der Auswertung der zugehörigen Signale des positionsempfindlichen Fotodetektionssystems der Zentrierzustand bestimmt wird.

10. Vorrichtung zur Ausübung des Verfahrens nach Anspruch 1 mit einer Lichtquelle (1), einem positionsempfindlichen Fotodetektionssystem (10) und einer Abbildungsoptik, die einen von der Lichtquelle (1) ausgehenden Lichtstrahl auf eine jeweils zu untersuchende Grenzfläche (6) des optischen Systems (7) kollimiert und eine von dort reflektierte Wellenfront auf das positionsempfindliche Fotodetektionssystem (10) abbildet, sowie einer Auswertungselektronik (12) zur Bestimmung der Ablage der von der jeweils zu untersuchenden Grenzfläche (6) reflektierten Wellenfront gegenüber einer Bezugsachse und damit der Neigung der jeweils zu untersuchenden Grenzfläche (6) gegenüber der Bezugsachse aus den positionsabhängigen Ausgangssignalen, **gekennzeichnet durch**
a) eine Hilfsoptik (2) zur Erzeugung eines parallelen Lichtstrahls aus der Strahlung der Lichtquelle (1) und zur Abbildung der von der zu untersuchenden Grenzfläche (6) reflektierten Wellenfront auf das positionsempfindliche Fotodektektionssystem (10),
b) einen Strahlteiler (3) zur Aufteilung des parallelen Lichtstrahls in einen Prüfstrahl und einen Referenzstrahl,
c) eine Kollimationsoptik (5) zur Kollimation des Prüfstrahls auf die jeweils zu untersuchende Grenzfläche (6) und einen Referenzspiegel (4) senkrecht zur optischen Achse (11) des Referenzstrahles,
d) eine Verstellvorrichtung (9) zum Abgleich der optischen Weglänge des Referenzstrahls auf die des Prüfstrahls bis zu der jeweils zu untersuchenden Grenzfläche (6),
e) eine Lichtquelle (1) mit einer Kohärenzlänge, die kürzer als die kürzeste optische Weglänge zwischen der jeweils zu untersuchenden Grenzfläche (6) und der nächstliegenden, Störreflexe erzeugenden Grenzfläche des optischen Systems (7) ist,
f) einen Modulator (8) zur zeitlichen Modulation der optischen Weglänge des Prüf- oder Referenzstrahls mit einem Modulationshub bis höchstens zur Größe der Kohärenzlänge,
g) zwei Prismensysteme (13, 14) zur Rückführung der vom Referenzspiegel reflektierten Wellenfront auf das positionsempfindliche Fotodetektionssystem (10) getrennt von dem Weg der an der zu untersuchenden Grenzfläche (6) reflektierten Wellenfront, und
h) eine Auswertungselektronik (12) zur Verarbeitung der positionsabhängigen Signale des positionsempfindlichen Fotodetektionssystems (10), die zunächst den vom zeitlich intensitätsmodulierten Interferogramm erzeugten modulierten Signalanteil von den durch die Störreflexe und den Referenzstrahl erzeugten unmodulierten Signalanteilen trennt und danach die Ablage des Schwerpunkts des Interferogramms gegenüber der Bezugsachse bestimmt.

11. Vorrichtung nach Anspruch 10, **dadurch gekennzeichnet**, daß das positionsempfindliche Detektionssystem (10) eine Lateraldiode ist.

12. Vorrichtung zur Ausübung des Verfahrens nach Anspruch 4, **dadurch gekennzeichnet**, daß der Modulator (8) ein mit einem Piezoantrieb (16) gekoppelter Referenzspiegel (4) ist.

13. Vorrichtung zur Ausübung des Verfahrens nach Anspruch 5, **dadurch gekennzeichnet**, daß der Modulator (8) eine Bragg-Zelle ist.

## Claims

1. Method for the measurement of inclinations of boundary surfaces in an optical system, wherein a light beam is collimated into a boundary surface respectively to be examined and the inclination of the boundary surface respectively to be examined relative to a reference axis is ascertained from the deviation of a wave front, which is reflected by the boundary surface to be examined, from the reference axis on a position-sensitive photo-detection system, characterised thereby, that
a) the light beam is divided into a test beam and a reference beam,
b) the reference beam is guided by way of reference beam path to a reference mirror preferably arranged perpendicularly to the optical axis of the reference beam,
c) the reference beam is tuned to the same optical path length as that of the test beam to the boundary surface respectively to be examined,
d) the coherence length of the light beam is chosen to be shorter than the shortest optical path length between the boundary surface respectively to be examined and the nearest boundary surface, which produces disturbing reflections, of the optical system,
e) the optical path length difference between the reference beam and the test beam to the boundary surface to be examined is modulated in time by a modulation depth of at most the size of the coherence length,
f) the wave front, which is reflected by the boundary surface respectively to be examined, is imaged onto the position-sensitive photo-detection system and there superimposed by the wave front, which is reflected by the reference mirror, whereby an interferogram, which is intensity-modulated in time, arises on the position-sensitive photo-detection system, and
g) the modulated signal component, which is produced by the interferogram, which is intensity-modulated in time, is initially separated from the unmodulated signal components, which are produced by the disturbing reflections and the reference beam, by electronic evaluation of the position-dependent signals of the position-sensitive photo-detection system and the deviation of the centre of gravity of the interferogram from the reference axis is ascertained thereafter.

2. Method according to claim 1, characterised thereby, that the modulation depth of the optical path length difference between the reference beam and the test beam to the boundary surface to be examined amounts to a single wavelength of the light used.

3. Method according to claim 1, characterised thereby, that the modulation depth of the optical path length difference between the reference beam and the test beam to the boundary surface to be examined is equal to the coherence length.

4. Method according to one of the claims 1 to 3, characterised thereby, that the modulation of the optical path length difference between the reference beam and the test beam to the boundary surface to be examined is undertaken by periodic variation of the geometric path length of the test beam or the reference beam.

5. Method according to one of the claims 1 to 3, characterised thereby, that the modulation of the optical path length difference between the reference beam and the test beam to the boundary surface to be examined is undertaken by variation of the refractive index of a medium in the ray path.

6. Method according to one of the claims 1 to 3, characterised thereby, that the modulation of the optical path length difference between the reference beam and the test beam to the boundary surface to be examined is undertaken by periodic frequency variation of the light in a part of the ray path.

7. Method according to one of the preceding claims, characterised thereby, that the wave front, which is reflected by the reference mirror, covers the entire receiving area of the position-sensitive photo-detection system.

8. Method according to one of the preceding claims, characterised thereby, that the separation of the intensity-modulated components from the unmodulated components of the position-dependent signals of the position-sensitive photo-detection system is undertaken in the lock-in technique.

9. Method according to one of the preceding claims, characterised thereby, that all boundary surfaces of the optical system are collimated at one after the other and the centring state is ascertained from the evaluation of the associated signals of the position-sensitive photo-detection system.

10. Apparatus for the performance of the method according to claim 1 with a light source (1), a position-sensitive photo-detection system (10) and an imaging optical system which collimates a light beam emanating from the light source (1) onto a boundary surface (6), which is respectively to be examined, of the optical system (7) and images a wave front reflected from there onto the position-sensitive photo-detection system (10) as well as with an electronic evaluating system (12) for ascertaining the deviation of the wave front reflected by the boundary surface (6), which is respectively to be examined, relative to a reference axis and thereby the inclination of boundary surface (6), which is respectively to be examined, relative to the reference axis from the position-dependent signals, characterised by
a) an auxiliary optical system (2) for the production of a parallel light beam from the radiation of the light source (1) and for the imaging of the wave front reflected by the boundary surface (6), which is respectively to be examined, onto the position-sensitive photo-detection system (10),
b) a beam divider (3) for dividing the parallel light beam into a test beam and a reference beam,
c) an optical collimating system (5) for collimating the test beam onto the boundary surface (6), which is respectively to be examined, and a reference mirror (4) perpendicular to the optical axis of the reference beam,
d) an adjusting device (9) for the equalisation of the optical path length of the reference beam with that of the test beam to the boundary surface (6), which is respectively to be examined,
e) a light source (1) with a coherence length which is shorter than the shortest optical path length between the boundary surface (6), which is respectively to be examined, and the nearest boundary surface, which produces disturbing reflections, of the optical system (7),
f) a modulator (8) for the modulation in time of the optical path length of the test beam or the reference beam by a modulation depth of at most the size of the coherence length,
g) two prism systems (13, 14) for the return of the wave front, which is reflected by the reference mirror, to the position-sensitive photo-detection system (10) separately from the path of the wave front reflected at the boundary surface (6) to be examined and
h) an electronic evaluating system (12) for the processing of the position-dependent signals of the position-sensitive photo-detection system (10), which evaluating system (12) initially separates the modulated signal component, which is produced by the interferogram, which is intensity-modulated in time, from the unmodulated signal components, which are produced by the disturbing reflections and the reference beam, and thereafter ascertains the deviation of the centre of gravity of the interferogram from the reference axis.

11. Apparatus according to claim 10, characterised thereby, that the position-sensitive photo-detection system (10) is a lateral diode.

12. Apparatus for the performance of the method according to claim 4, characterised thereby, that the modulator (8) is a reference mirror (4) coupled with a piezo-electric drive (16).

13. Apparatus for the performance of the method according to claim 5, characterised thereby, that the modulator (8) is a Bragg cell.

## Revendications

1. Procédé pour mesurer les inclinaisons de surfaces limites dans un système optique où un rayon de lumière subit une collimation sur une surface limite respectivement à examiner et dans lequel, à partir de la réception d'un front d'ondes réfléchi par la surface limite à examiner par rapport à un axe de référence, on définit sur un système de photodétection réagissant à la position l'inclinaison de la surface limite respectivement à examiner par rapport à l'axe de référence, caractérisé en ce que
a) le rayon de lumière est divisé en un rayon de test et un rayon de référence,
b) le rayon de référence est guidé par un trajet de rayons de référence sur un miroir de référence disposé de préférence perpendiculairement à l'axe optique du rayon de référence,
c) le rayon de référence est accordé sur la même longueur de trajet optique que celle du rayon de test jusqu'à la surface limite respectivement à examiner,
d) la longueur de cohérence du rayon de lumière est choisie pour être plus courte que la longueur la plus courte du trajet optique entre la surface limite respectivement à examiner et la surface limite suivante, produisant des réflexes perturbateurs du système optique,
e) la différence de longueur du trajet optique entre le rayon de référence et le rayon de test jusqu'à la surface limite à examiner est modulée dans le temps suivant une amplitude de modulation allant au maximum jusqu'à la grandeur de la longueur de cohérence,
f) le front d'ondes réfléchi par la surface limite respectivement à examiner est représenté sur le système de photodétection réagissant à la position et qu'on y superpose à celui-ci le front d'ondes réfléchi par le miroir de référence par quoi on obtient sur le système de photodétection réagissant à la position un interférogramme dont l'intensité est modulée dans le temps et
g) par une analyse électronique des signaux dépendant de la position du système de photodétection réagissant à la position, on sépare d'abord la partie de signaux modulés produite par l'interferogramme dont l'intensité est modulée dans le temps des parties de signaux non modulés produites par les réflexes perturbateurs et le rayon de référence et qu'on définit ensuite la réception du point de gravité de l'interférogramme par rapport à l'axe de référence.

2. Procédé selon la revendication 1, caractérisé en ce que l'amplitude de modulation de la différence de longueur de trajet optique entre le rayon de référence et le rayon de test jusqu'à la surface limite à examiner représente une longueur d'onde unique de la lumière utilisée.

3. Procédé selon la revendication 1, caractérisé en ce que l'amplitude de modulation de la différence de longueur de trajet optique entre le rayon de référence et le rayon de test jusqu'à la surface limite à examiner est égale à la longueur de cohérence.

4. Procédé selon l'une des revendications 1 à 3, caractérisé en ce que la modulation de la différence de longueur de trajet optique entre le rayon de référence et le rayon de test jusqu'à la surface limite à examiner est exécutée par une variation périodique de la longueur de trajet géométrique du rayon de test ou de référence.

5. Procédé selon l'une des revendications 1 à 3, caractérisé en ce que la modulation de la différence de longueur de trajet optique entre le rayon de référence et le rayon de test jusqu'à la surface limite à examiner est exécutée en modifiant l'indice de réfraction d'un milieu dans le trajet de rayons.

6. Procédé selon l'une des revendications 1 à 3, caractérisé en ce que la modulation de la différence de longueur de trajet optique entre le rayon de référence et le rayon de test jusqu'à la surface limite à examiner est exécutée par une variation périodique de la fréquence de la lumière dans une partie du trajet de rayons.

7. Procédé selon l'une des revendications précédentes, caractérisé en ce que le front d'ondes réfléchi par le miroir de référence couvre toute la surface de réception du système de photodétection réagissant à la position.

8. Procédé selon l'une des revendications précédentes, caractérisé en ce que la séparation des parties dont l'intensité est modulée des parties non modulées des signaux dépendant de la position du système de photodétection réagissant à la position est exécutée par la technique de verrouillage.

9. Procédé selon l'une des revendications précédentes, caractérisé en ce que toutes les surfaces limites du système optique subissent une collimation les unes après les autres et qu'on détermine à partir de l'exploitation des signaux afférents du système de photodétection réagissant à la position l'état de centrage.

10. Dispositif pour la mise en oeuvre du procédé selon la revendication 1 avec une source de lumière (1), un système de photodétection (10) réagissant à la position et une optique de représentation qui fait subir une collimation à un rayon de lumière partant d'une source de lumière (1) sur une surface limite (6) respectivement à examiner du système optique (7) et qui représente un front d'ondes réfléchi par celle-ci sur le système de photodétection (10) réagissant à la position, et avec une électronique d'exploitation (12) pour définir le dépôt du front d'ondes réfléchi par la surface limite (6) respectivement à examiner par rapport à un axe de référence et par conséquent l'inclinaison de la surface limite (6) respectivement à examiner par rapport à l'axe de référence à partir des signaux de départ dépendant de la position, caractérisé par
a) une optique auxiliaire (2) pour produire un rayon de lumière parallèle à partir du rayonnement de la source de lumière (1) et pour représenter le front d'ondes réfléchi par la surface limite (6) à examiner sur le système de photodétection (10) réagissant à la position,
b) un diviseur de rayons (3) pour diviser le rayon de lumière parallèle en un rayon de test et un rayon de référence,
c) une optique de collimation (5) pour la collimation du rayon de test sur la surface limite (6) respectivement à examiner et un miroir de référence (4) perpendiculaire à l'axe optique (11) du rayon de référence,
d) un dispositif de réglage (9) pour accorder la longueur du trajet optique du rayon de référence à celle du rayon de test jusqu'à la surface limite (6) respectivement à examiner,
e) une source de lumière (1) avec une longueur de cohérence qui est plus courte que la longueur la plus courte du trajet optique entre la surface limite (6) respectivement à examiner et la surface limite suivante du système optique (7) produisant des réflexes perturbateurs,
f) un modulateur (8) pour la modulation dans le temps de la longueur du trajet optique du rayon de test ou de référence avec une amplitude de modulation allant au maximum jusqu'à la grandeur de la longueur de cohérence,
g) deux systèmes à prisme (13, 14) pour ramener le front d'ondes réfléchi par le miroir de référence sur le système de photodétection (10) réagissant à la position séparément du trajet du front d'ondes réfléchi par la surface limite (6) à examiner et
h) une électronique d'exploitation (12) pour traiter les signaux dépendant de la position du système de photodétection (10) réagissant à la position qui sépare d'abord la partie de signaux modulés produite par l'interferogramme dont l'intensité a été modulée dans le temps des parties de signaux non modulés produites par les réflexes perturbateurs et le rayon de référence, et qui définit ensuite le dépôt du point de gravité de l'interférogramme par rapport à l'axe de référence.

11. Dispositif selon la revendication 10, caractérisé en ce que le système de détection (10) réagissant à la position est une diode latérale.

12. Dispositif pour la mise en oeuvre du procédé selon la revendication 4, caractérisé en ce que le modulateur (8) est un miroir de référence (4) couplé à une commande piézoélectrique (16).

13. Dispositif pour la mise en oeuvre du procédé selon la revendication 5, caractérisé en ce que le modulateur (8) est un cristal de Bragg.
